Europäisches Patentamt

European Patent Office

Office européen des brevets

(11) Publication number: **0 181 052**
**A1**

# EUROPEAN PATENT APPLICATION

(21) Application number: **85303574.9**

(22) Date of filing: **21.05.85**

(51) Int. Cl.⁴: **H 04 N 5/68**
**H 04 N 9/12**

(30) Priority: **01.10.84 US 656262**

(43) Date of publication of application:
**14.05.86 Bulletin 86/20**

(84) Designated Contracting States:
**AT BE CH DE FR GB IT LI LU NL SE**

(71) Applicant: **AZURAY, INC.**
**1 Victor Square**
**Scotts Valley, CA 95066(US)**

(72) Inventor: **Lau, Robert Shing-Shun**
**5438 Kaveny Drive**
**San Jose CA 95129(US)**

(72) Inventor: **Murphy, Roy Emerson**
**1140 Larkin Valley Road**
**Watsonville CA 95076(US)**

(74) Representative: **Cross, Rupert Edward Blount et al,**
**BOULT, WADE & TENNANT 27 Furnival Street**
**London EC4A 1PQ(GB)**

(54) **High resolution video display system.**

(57) There is provided a multi-beam raster scan video display system having a multi-beam cathode ray tube (12) for producing a plurality of beams for simultaneously writing a plurality of scan lines. The tube has input terminals (15) for receiving a signal for each beam. There is also a multi-dimensional video memory (20–27) for storing video data for each beam, and a pixel splitter for simultaneously transferring video data from the video memory (20–27) for each said beam to the input terminals of the tube. In a preferred embodiment, the video memory means includes multi-bit storage for each said beam and the pixel splitter includes a digital-to-analog converter for each said beam which converts the multi-bit video data into a grey scale analog video signal. A multi-port controller (13) for accessing the video memory has a first port for accessing the video memory while the tube is scanning and a second, lower priority port which provides access to specific pixels in the pixel memory.

FIG-1

# HIGH RESOLUTION VIDEO DISPLAY SYSTEM

The present invention relates generally to video display systems with high resolution and particularly to an apparatus and method for using a multi-beam cathod ray tube and parallel processing techniques for producing a high resolution display.

Prior art high resolution video displays have generally provided a resolution of not much more than 1280 by 1024 pixels. (A pixel is the smallest unit of resolution of an image and corresponds roughly to one "point" on one scan line of a video display.) New medical imaging devices and advances in various other information processing fields, however, have generated a need for even higher resolution video displays.

One reason that state of the art video displays have been limited in resolution to approximately 1280 by 1024 pixels is that the architecture of current video display devices makes it very difficult to achieve higher pixel densities (which is equivalent to higher resolution) without using very high speed, expensive circuitry.

Another reason has been the lack of an appropriate cathode ray tube. The prior art includes at least two types of multi-beam cathode ray tubes. The first type are color television picture tubes which have three guns, each producing one electron beam, one for each of three colors. Examples of such tubes include U.S. Patent 3,393,336 (France et al.); U.S. Patent 3,411,029 (Karr); U.S. Patent 3,973,161 (van Leeuwen et al.); U.S. Patent 4,208,581 (Stratton); and U.S. Patent 4,337,409 (van der Heijden et al.). The second type are single-gun, multi-beam tubes such as those described in U.S. Patent 3,594,600 (Murata et al.); U.S. Patent 4,361,781 (Depp et al.); and U.S. Patent 3,999,263 (Marshall et al.).

It is a primary object of the present invention to provide an improved high resolution video display system.

Another object of the invention is to provide a video memory and controller architecture which facilitates writing large amounts of data using a multi-beam cathode ray tube, thereby enabling the use of higher resolution video displays than available in the prior art.

In summary, the invention comprises a multi-beam raster scan video display system having a multi-beam cathode ray tube for producing a plurality of beams for simultaneously writing a plurality of scan lines. The tube has input terminals for receiving a signal for each beam. There is also a video memory for storing video data for each beam, and a pixel spitter for simultaneously transferring video data from the video memory for each said beam to the input terminals of the tube. The video memory is organized in a multi-dimensional format which facilitates simultaneous access to the video data for multiple beams and selective access to any specified pixel in multiple frames of video data.

In a preferred embodiment, the video memory includes multi-bit storage for each beam and the pixel spitter includes a digital-to-analog converter (DAC) for each said beam which converts the multi-bit video data into a grey scale analog video signal. A multi-port memory controller for accessing the video memory has a first port for accessing the video memory while the tube is scanning and a second (lower priority) port for updating the contents of the video memory. The second port provides CPU access to specific pixels in the pixel memory.

While the tube is scanning, a video controller sequentially accesses a predefined portion of the video memory, starting at a specified address location.

There is also provided a graphic display controller for masking at least a portion of the video image with a second video image. This allows the system to superimpose on the main video image a grid or an arrow or any other useful pattern or image.

A microprocessor, responsive to predefined commands from an external source, can selectively read and write data into the video memory and control the portion of the data in the video memory which is displayed.

Additional objects and features of the invention will be more readily apparent from the following detailed description and appended claims when taken in conjunction with the drawings, in which:

Figure 1 depicts a block diagram of a video display system in accordance with the invention.

Figure 2 depicts a video display being written by several beams moving in parallel across the screen.

Figure 3 depicts a block diagram of a preferred embodiment of the invention.

Figure 4 depicts a block diagram of a video display controller.

Figure 5 depicts a block diagram of the memory and logic circuitry for one beam of a multi-beam system having multiple frames of image data.

Figure 6 depicts a more detailed block diagram of a portion of the memory and logic circuitry shown in Figure 5.

Figure 7 depicts a detailed block of the memory and logic circuitry for one bit of one beam of a multi-beam system having multiple bits of image data for each pixel.

Figure 8 depicts a timing diagram of the operation of the video diplay processor shown in Figure 4.

Figure 9 depicts the multi-dimensional format of the video memory.

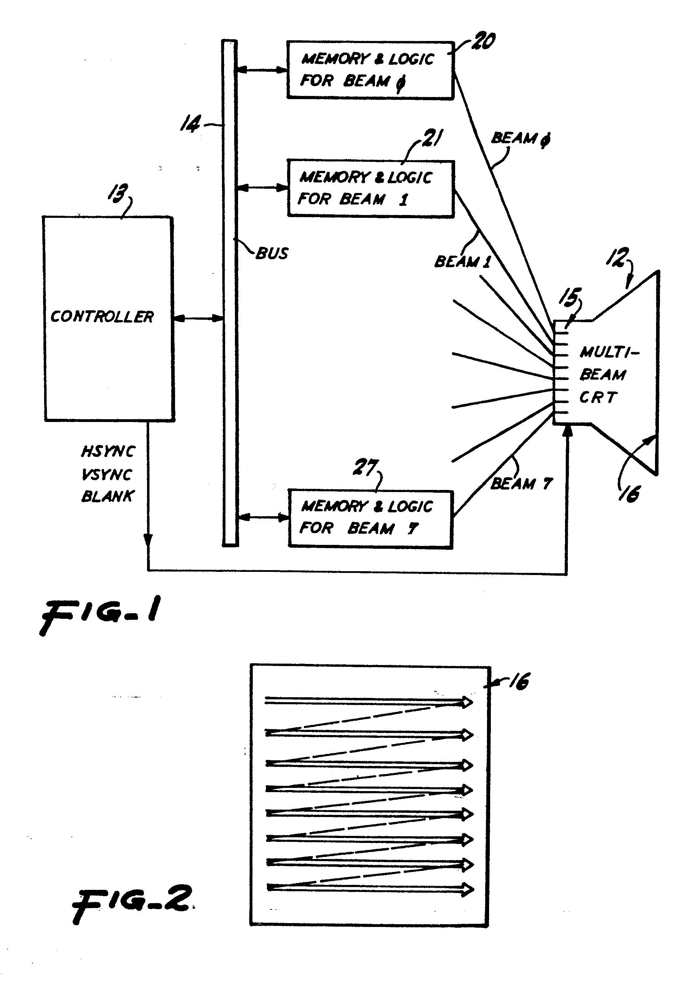

Referring to Figure 1, there is shown a block diagram of a video display system 11 in accordance with the invention. The main function blocks of the system 11 are a multi-beam cathode ray tube (CRT) 12, video memory and logic 20-27 for each beam, a controller 13, and a bus 14 for carrying data and control signals between the controller 13 and the video memory and logic 20-27.

Referring to Figure 2, the CRT 12 is a raster scan device that has eight beams for simultaneously writing data on eight scan lines. The eight beams sweep across the screen 16 in a band of parallel, adjacent scan lines writing the picture as the beams move from the left side to right side of the screen 16. Then, during a period of time called horizontal blanking, the beams are turned off (or "blanked") and aimed at the left side of the next band of scan lines, just below the current set. This process continues 256 times until the whole image has been written on the screen. Then the beams, during a period called vertical blanking, are blanked and aimed at the left side of the top most band of scan lines.

As will be appreciated by one skilled in the art, the number of beams and the number of horizontal bands on the screen are of no consequence and may be changed without detracting from the substance of the invention. Similarly, in alternate embodiments of the invention the CRT 12 could sweep alternately from left to right and then right to left, or could sweep from top to bottom. The invention is also independent of the specific structure of the multi-beam gun and is independent of whether the CRT 12 works in a direct view or projection type mode.

Referring back to Figure 1, the CRT has parallel input terminals 15 for each beam coupled to the output of each video memory and logic circuit 20-27. The controller 13 is used primarily for reading and writing data into the video memory. In embodiments having more memory than is needed for a single image, the controller 13 determines which portion of the data in the video memory should be displayed. The controller 13 also generates the synchronization and blanking signals VSYNC, HSYNC and BLANK used by the CRT 12 for synchronizing the position of the beams with the flow of image data into the input terminals 15 of the beams. As is standard, the VSYNC signal marks vertical synchronization periods, HSYNC marks horizontal synchronization periods, and BLANK suppresses writing by the CRT 12 (i.e., during the synchronization periods).

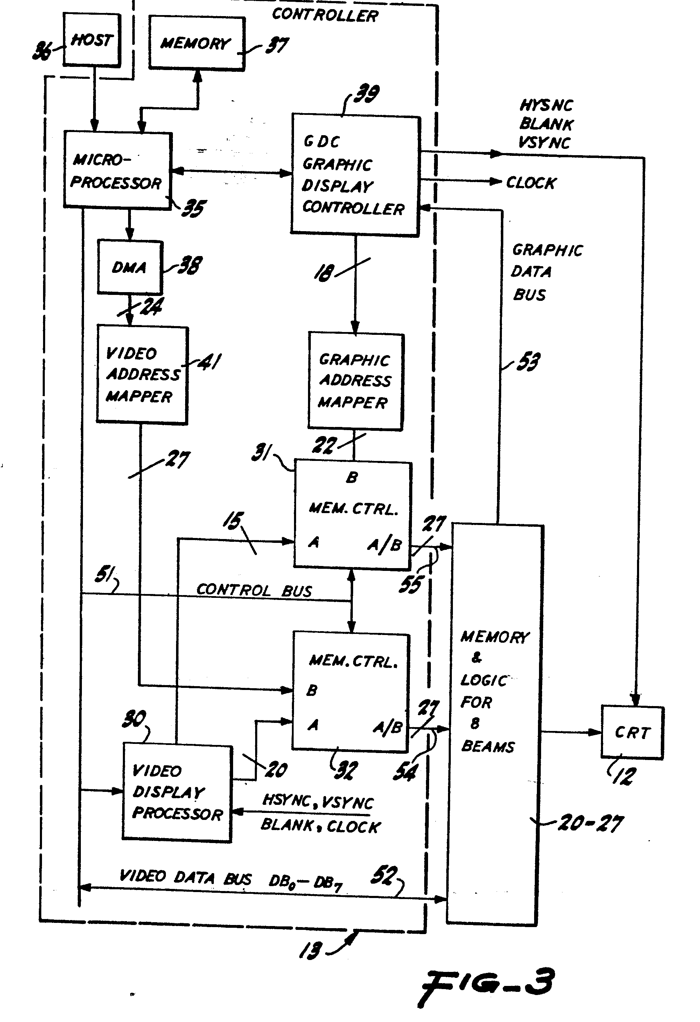

Referring to Figure 3, in the preferred embodiment the controller 13 works as follows. A microprocessor 35 (e.g., a Motorola 68000), responsive to commands from an external source such as a host computer 36, is used to coordinate the functions of the controller 13. It has a memory 37 for storing control programs (e.g., an interpreter for commands received from the host computer 36) and providing scratch pad space for the microprocessor 35. A direct memory access controller (DMA) 38 of conventional design (e.g., a Motorola MC68030) is used to facilitate reading data from and writing data to the video memory 20-27.

A graphic display controller (GDC) 39 (e.g., a GDC 7220) is used for several purposes. First, it generates the synchronization and blanking signals VSYNC, HSYNC and BLANK used by the CRT 12 and a video display processor 30 (described below). Second, it generates a second video image used as a mask layer which is superimposed on top of the main video image. The second video image is stored in a portion of the memory 20-27 called the mask memory or graphic memory. The use of a mask layer allows the system to superimpose on the main video image a grid or an arrow or any other useful pattern or image.

While in the preferred embodiment there is provided a graphic display processor 39 and a mask layer as described herein, the invention in its main aspect is not limited to embodiments incorporating such a feature.

Referring to Figure 9, in the preferred embodiment the main video memory is organized as follows. For each pixel, eight bits of memory are used, providing a grey scale having 256 gradations. One frame of data, which is the amount of data needed to fill one screen, comprises 2048 by 2048 pixels. Thus one frame comprises 4 megabytes (or 32 megabits) of data. (One byte is 8 bits.) The system 11 can accomodate up to 32 frames of image data. In the preferred embodiment, the minimum amount of memory needed for an operational system is 8 megabytes, which is sufficent to hold two frames of video data.

The 27-bit address of any one pixel of data in the main video memory is denoted as:

$$fffffyyyyyyyyzzzxxxxxxxxxxxx$$

where $fffff$ is the frame number, $yyyyyyyy$ is the row or band number (i.e., the vertical position) of the pixel on the screen, $zzz$ is the beam number, and $xxxxxxxxxx$ is the column number or horizontal position of the pixel on the screen.

The mask or graphic memory can have a separate mask or frame of single bit pixels for each frame of video data. Therefore the address of any one pixel of data in the mask or graphic memory can be denoted as:

$$fffffyyyyyyyyzzzxxxxxxxxxxx$$

where the fffff, yyyyyyyy, zzz, and xxxxxxxxxx fields have the same meaning as for the main video memory. In another embodiment the graphic memory could have just a single mask or frame of data which is used regardless of the frame of video data being displayed.

Still referring to Figure 9, the video memory is organized in a multi-dimensional format in order to facilitate simultaneous access to the video data for multiple beams and selective access to any specified pixel in multiple frames of data. The dimensions are as follows: frame, beam, gray scale, tile, x, and y. The memory is organized in "tiles" which are 16 bits wide (in the x direction), 8 bits long (in the y direction, one for each beam) and 8 bits deep (for the grey scale). As will be described in more detail below, while video data is fetched for display on the CRT 12, each tile is read as a single entity. That is, all the bits in the each tile are treated as being at a single memory address. When the microprocessor 35 accesses the video memory, it can address any single pixel within any tile. Individual bits within the grey scale of a pixel are not individually addressable in the preferred embodiment, although such instructions would be easy enough to implement by means of software in the microprocessor 35.

Referring back to Figure 3, the memory and logic 20-27 for the beams is dual-ported for both the main video memory and for the mask memory through the use of two dynamic memory controllers 31 and 32. Memory controller 32 arbitrates between memory requests by the microprocessor 35 and the video display processor 30. Similarly, memory controller 31 arbitrates between memory requests by the GDC 39 and the video display processor 30. The output of each memory controller 31 and 32 is a memory address signal which is asserted on either the video address bus 54 or the graphic address bus 55, respectively.

Since the amount of video and mask memory used in the system is generally quite large (e.g., a minimum of 64 Megabits of video memory and 8 Megabits of mask memory in the preferred embodiment) dynamic memories are used in the preferred embodiment in order to minimize the cost of the system. Both memory controllers 31 and 32 automatically refresh the dynamic memories in their respective portions of the memory and logic circuits 20-27.

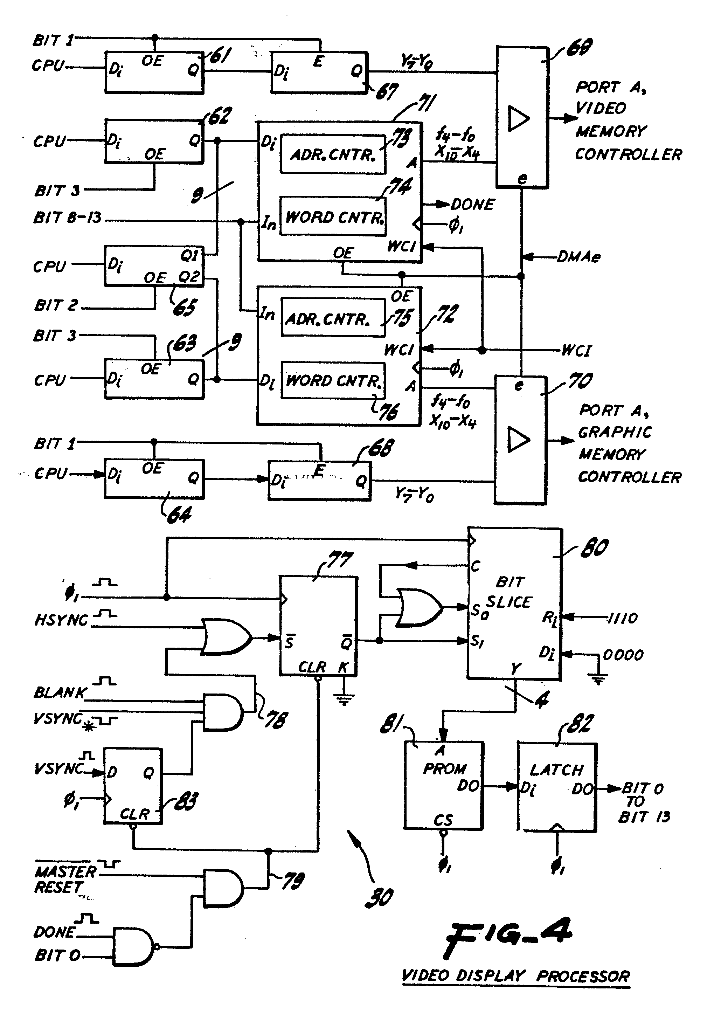

The A-ports of the memory controllers 31 and 32, which have priority over memory access requests through the B-ports, are used (by the video display processor 30) to access the video and mask memories while the CRT 12 is scanning. The B-ports are used by the microprocessor 35 and GDC 39 to read and update the video and mask memories. While the CRT 12 is scanning, a video display processor 30 generates the addresses used to access the video and mask memories 20-27. These addresses must be generated quickly and in lock-step with the scan position of the beams. Therefore a special circuit, shown in Figure 4, (called a video display processor 30) is used to generate these addresses.

The bus 14 between the controller 13 and the memory and logic 20-27 for the eight beams includes several sub-buses. There is a control bus 51 for sending control signals to the video display processor 30 and memory controllers 31 and 32. There are two data buses: a video data bus 52 for transmitting data between the microprocessor 35 and the video memory, and a graphic data bus 53 for transmitting data between the graphic display controller GDC 39 and the mask memory. There are also two address buses: a video address bus 54 and a graphic address bus 55.

The microprocessor 35 can read and write into the main video memory through the B-port of memory controller 32 at any time, except that its memory requests may be somewhat delayed if they coincide with video display processor memory requests. The video memory is addressed indirectly through a video address mapper 41. This converts the 24 bit address generated by DMA 38 into the 27 bit address needed by the video memory. The video address mapper 41 works as follows. The least significant 23 bits of the DMA generated address are not affected. If the most significant bit of the address from the DMA 38 is a zero, it sets bits 24 to 27 of the video memory address equal to zero. If the most significant bit of the address from the DMA 38 is a one, it sets bits 24 to 27 of the video memory address equal to the value of a four bit register set by the microprocessor 35. Since these four bits are used only to determine the frame portion of the video memory address the value of the four bit register in the address mapper 41 will normally not have to be changed very often.

The operation of the graphic address mapper 42 is similar to that of the video address mapper 41. It converts the 18 bit address generated by the graphic display controller GDC 39 into the 27 bit address needed by the mask memory.

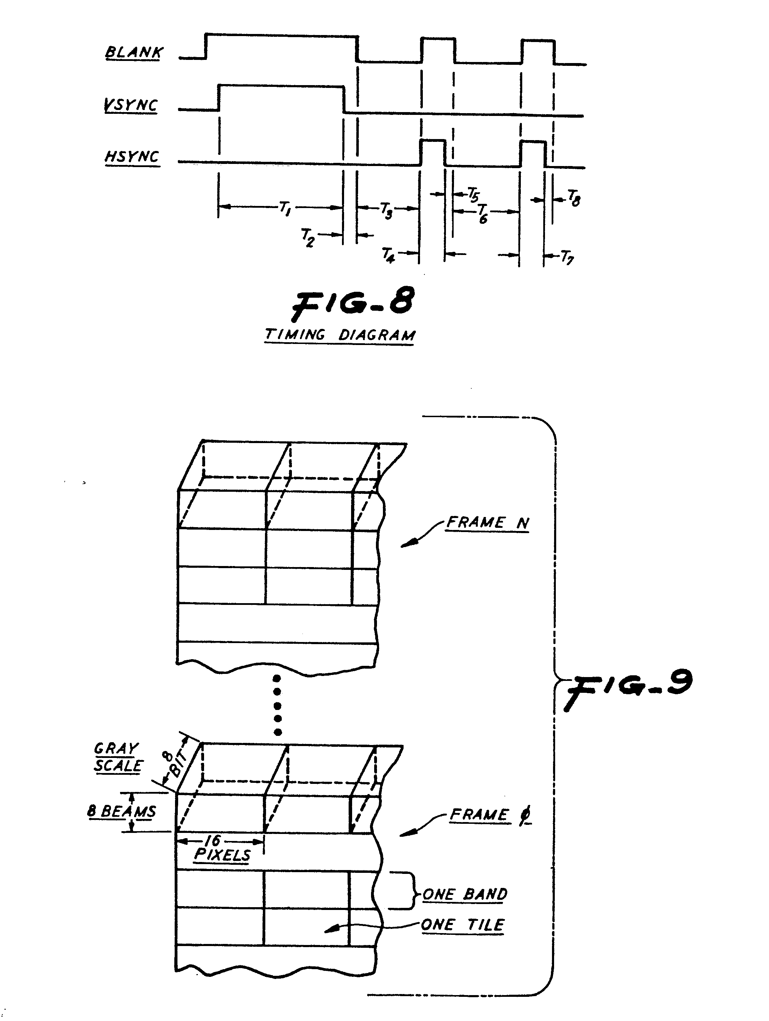

Referring to Figures 4 and 8, the video display processor (VDP) 30 is basically a special purpose address generator for use while the CRT 12 is scanning. It generates addresses for the A-port of both the video and graphic memory controllers 31 and 32. The CPU 35 loads latches 61-64 with starting address values while the CRT 12 is scanning and at the beginning of vertical blanking. A portion of each of these starting addresses is loaded from the latches 62 and 64 into binary counters (also called address counters) 73 and 75 in DMA address generators 71 and 72, respectively, at the end of horizontal or vertical blanking. Then as the beams sweep across the screen (i.e., as they traverse one band of scan lines), the starting addresses are incremented 255 times.

The starting address for the video memory and the starting address for the mask memory are both denoted:

$$f_4 - f_0, y_7 - y_0, x_{10} - x_4.$$

The zzz portion of each address, denoting the beam number, is not needed since all beams will be accessed simultaneously. Similarly, the $x_3 - x_0$ portion of the address is not needed because sixteen pixels (in each beam) are read at a time, as described below.

The $y_7 - y_0$ portion of the graphic memory starting address is stored initially in latch 61 and the $y_7 - y_0$ portion of the video starting address is stored initially in latch 64. The $f_4 - f_0, x_{10} - x_4$ portion of the graphic memory starting address is stored initially in latch 62 and the $f_4 - f_0, x_{10} - x_4$ portion of the video starting address is stored initially in latch 63. These values are latched into their respective latches under the control of the microprocessor 35 which operates substantially asynchronously from the video display processor 30.

The microprocessor 35 also stores in latch 65 a value equal to the number of pixels per horizontal scan line divided by 16. This is the number of "tiles" in each raster scan line.

The bit slice 80 is basically a multi-mode address sequence generator. It is used to generate control signals which control certain portions of the VDP 30. In the preferred embodiment the bit slice 80 generates a four-bit address Y. This address is used to address a programmable read-only memory PROM 81. Since the address is four bits long, the bit slice's "program" is only 16 "words" long. The PROM 81 is a 16 by 16 array of bits, of which only 16 by 14 bits are used. For each address Y generated by the bit slice 80, the PROM 81 transmitts 14 bits or microcode (denoted Bit 0 to Bit 13) which control the operation of the video display processor 30. Each 14-bit word of the bit slice program corresponds to a particular state of the VDP 30 and a particular operation to be performed by the VDP. Thus the bit slice 80 works much like the sequencer in a microprocessor and the data in the PROM 81 is essentially a microcode program for running the video display processor 30. The output of the PROM 81 is latched in latch 82 in order to provide stable signals Bit 0 to Bit 13.

The first seven words of the microcode program comprise a "load next starting address" routine used before the scanning of each horizontal band of scan lines. The

very first word (at address 0000) is a no-op which disables the DONE signal, but does not enable any other operations in the VDP 30. The next six words control the process of loading the video data starting address and the graphic data starting address into the video display processor 30. The remaining nine words, which are all identical, comprise a "scan line routine" which allows the address counters 73 and 75 for the video and graphic memory addresses to be incremented in lockstep with the video scan rate.

The bit slice's mode of operation is controlled by the S0 and S1 inputs. When $(S0,S1) = (1,1)$, the bit slice 80 loads in a starting address value from the $D_i$ port. In the preferred embodiment the $D_i$ value is 0000 (which is the beginning of the "load next starting address" routine). When $(S0, S1) = (1,0)$, the bit slice 80 loads in a starting address value from the $R_i$ port. In the preferred embodiment the $R_i$ value is 1110 (i.e., fourteen, which is the next to last word in the "scan line routine"). When $(S0,S1) = (0,0)$, the bit slice sequencer's address value increments with each upwards clock transition.

The mode of operation of the bit slice 80 is controlled by several input signals. First, at the end of each scan line, a DONE signal is generated which clears flip-flop 77. When flip-flop 77 is cleared, the Q-bar output of the flip-flop 77 forces $(S0,S1) = (1,1)$, thereby causing the bit slice 80 to restart at address 0 of the "load next starting address" routine. Next, upon the occurrence of horizontal blanking, the HSYNC signal goes positive and causes a true value to be stored in flip-flop 77. The Q-bar output of flip-flop 77 then causes a zero value to be asserted on both the S0 and S1 inputs of the bit slice 80, which allows the bit slice 80 to increment upon each clock cycle. This starts up the "load next starting address" routine. Similarly, about one microsecond before the end of vertical blanking, a positive signal is generated on line 78, which is latched into flip-flop 77, which causes the bit slice 80 to start up the same routine. Note that when the CRT 12 is in the midst of scanning a line, the J input to the flip-flop 77 is low and therefore the state of the flip-flop 77 remains unchanged until it is cleared by a DONE signal.

Upon the occurrence of a down-going signal on either the Master Reset line (which is controlled by the microprocessor 35), the DONE line, or Bit 0, line 79 goes low, clearing flip-flops 77 and 83. As already discussed above, this causes the bit slice 80 to restart at address 0 of the "load next starting address" routine.

The Bit 0 to Bit 3 outputs of the PROM 81 are used as gating signals, controlling the flow of data through the video display processor 30. Bit 8 to Bit 13 are used as encoded instructions, dictating what operation the DMA address generators 71 and 72 should perform upon each clock cycle. The other Bit signals are used for other signal flow control purposes not important to the explanation of the invention.

The DMA address generators 71 and 75 (each of which comprises two cascaded Am2940's, made by AMD, in the preferred embodiment) work basically as follows. Depending on the instruction value on the I and the WCI ports of the generator, the generator can perform certain tasks in each clock cycle including: load a value from the $D_i$ port into the address counter 73; load a a value from the $D_i$ port into the word counter 74; simultaneously increment the address counter 73 and decrement the word counter; do a no-op. The increment operation can be made conditional on the value of the word counter 74, so that the address incrementing process is automatically stopped when the word counter 74 decrements to zero. Furthermore, when the word counter 74 reaches zero, a DONE signal is generated. The DONE signal is used to reset the timing control portion of the VDP 30, and can also be used to interrupt the microprocessor 35 to initiate the running of an end-of-horizontal-line routine.

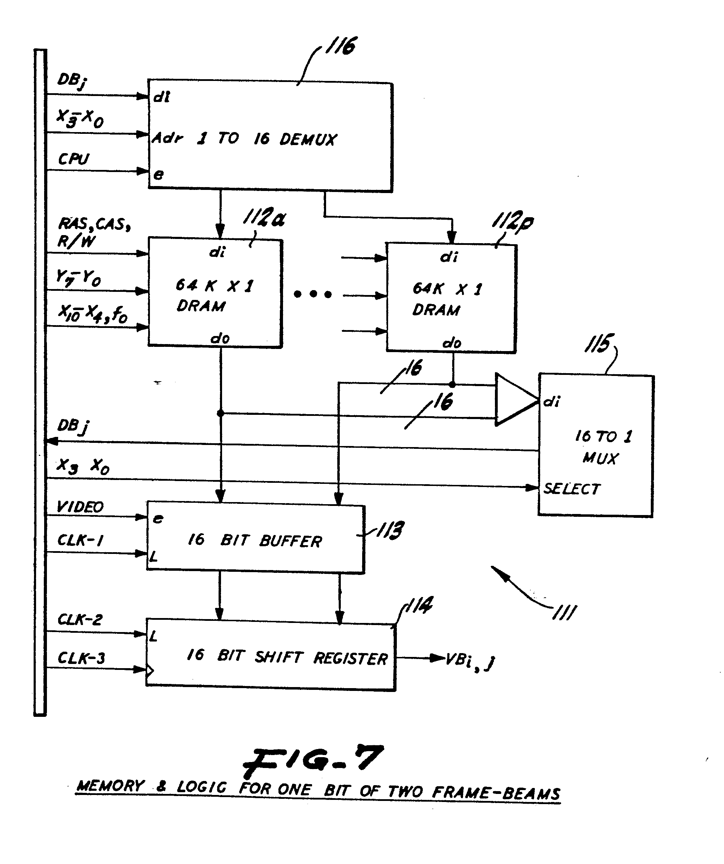

After the CRT 12 scans each band of lines the following operations take place. DMA address generator 71 issues a DONE signal, which clears flip-flop 77, thereby forcing the (S0,S1) inputs of bit slice 80 to (1,1). This causes the bit slice to reset its address counter to zero. The microcode at address zero resets the DONE signal and causes the DMA address generators 71 and 72 to do no-ops (e.g., reinitializing their word and address counters). When the HSYNC period begins or the VSYNC period ends (just before the end of the blanking period), flip-flop 77 is set. This enables the bit slice address counter by setting (S0,S1) = (0,0). On the first count, Bit 1 is enabled and the $y_7$-$y_0$ portions of the video and graphic starting addresses are transferred from latches 61 and 64 to latches 67 and 68, respectively. On the second count, the mode of the DMA address generator's is set by loading a value from a buffer not shown in Figure 4. On the third count, Bit 2 is enabled and the tile count value in latch 65 is transferred into the word count buffers (not shown) in DMA address generators 71 and 72, respectively. On the fourth count, Bit 3 is enabled and the $f_4$-$f_0$,$x_{10}$-$x_4$ portions of the video and graphic starting addresses are transferred from latches 62 and 63 to the address count buffers (not shown) in DMA address generators 71 and 72, respectively. On the fifth count, the DMA address generators reinitialize their word counters and address counters by loading the data in the word count buffers and address count buffers (not shown) into the word counters 74 and 76, and address counters 73 and 75. On the sixth count, the word counters 74 and 76, and the address counters 73 and 75 and enabled. On the seventh count, and thereafter until the end of the scan line, the microcode generated by the bit slice 80 enables the DMA address generators 71 and 72 to increment the address counters 73 and 75 and decrement the word counters 74 and 76. These counters are incremented/decremented on each clock pulse of the $\phi_1$ clock which coincides with an enabled WCI input signal. The WCI input signal is enabled, and thus the address counters are incremented, once each sixteen pixel cycles. Note that in the preferred embodiment, the $\phi_1$ clock runs at half the rate of the pixel clock (Clock-3 in Figure 7).

The HSYNC and VSYNC signals are generated in such a way that they are coordinated with the operation of the bit slice 80. Thus the VSYNC signal ends the proper amount of time before the end of the blanking period so that video data for the first scan line is ready in the pixel spitter shift registers 114 (see Figure 7) when the beams of the display device are ready to begin scanning the first band of scan lines.

As the CRT 12 scans across a band of scan lines the following operations take place. In lock step with the CRT 12, a series of steps is performed during each period corresponding to the display of 16 pixels. For purposes of this description, this 16 pixel period is divided into 16 pixel periods numbered from 0 to 15.

During pixel period 1 the WCI signal is enabled and the address counters 73 and 75 are incremented (and the word counters 74 and 76 are decremented). After each increment operation, during pixel period 3, the DMAe signal is enabled and the new address value from both the latches 67 and 68 and the DMA address generators 71 and 72 are transferred by buffers 69 and 70 to the A-ports of the video and graphic memory controllers 31 and 32, respectively. During a later pixel period the addressed tile of pixels are stored in a first buffer (see Figure 7) and at the end of the last pixel period these pixels are transferred to a shift register. This process continues until the end of the raster scan band is reached and a DONE signal is generated. Then the whole process repeats.

Referring temporarily to Figure 8, the timing circuit portion of the video display controller 30 shown in Figure 4 works as follows. During the time slot at the beginning of each horizontal blanking period (e.g., $T_4$ and $T_7$) and at end of each vertical blanking period (e.g., $T_2$, while BLANK is active but VSYNC is not active) the starting addresses for the next band of scan lines are loaded into counters 63 and 64. As shown in Figure 8, the VSYNC and HSYNC signals shut off before the end of the corresponding blanking period. The CRT beams are blanked as long as the BLANK signal is active (high). The BLANK signal stays active for approximately one microsecond after either VSYNC of HSYNC shuts off. Also, at the end of each scan line, a DONE signal is generated several clock cycles before the BLANK signal becomes active, thereby enabling the bit slice 80 to reset to address zero before the HSYNC or VSYNC signal enables the bit slice to start running the "load next starting address" routine.

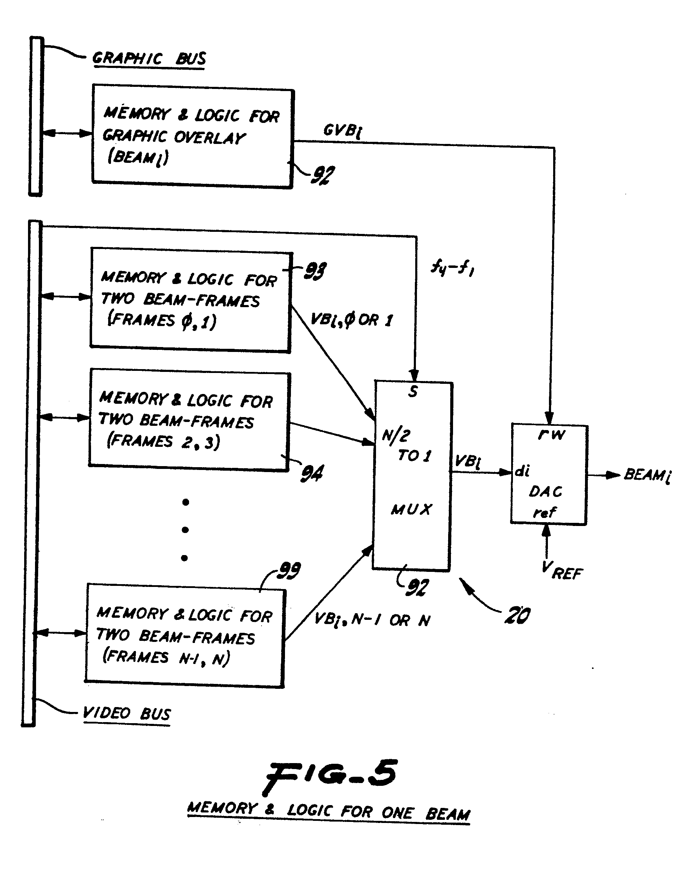

Referring to Figure 5, there is shown the basic organization of the memory and logic circuit 20 for each beam of the CRT 12. The video signal (Beam$_i$) for each beam is generated by a standard eight-bit video digital-to-analog converter (DAC) 91 (e.g., an Analogic AH8308T). The output level of DAC 91 is normally determined by a reference voltage $V_{ref}$ (i.e., the maximum output voltage) and an eight-bit binary value $VB_i$ (where i is the number of the beam) which specifies the fraction of the reference voltage to be generated. However, whenever the input to the ref-white port (labelled rw) of the DAC 91 is active the DAC 91 generates its maximum voltage output signal. This happens whenever the mask memory and logic circuit 92 generates a positive output on the $GVB_i$ line. In other words, images in the the mask layer override images in the video image.

Another aspect of the memory and logic circuit 20 is that multiple frames of video data can be accommodated. A multiplexer 92 uses the $f_4-f_1$ portion of the video address bus to select which bank 93-99 of memory to read the video data in from. In the preferred embodiment, for reasons to be explained below, each bank 93-99 of memory contains two frames of video data.

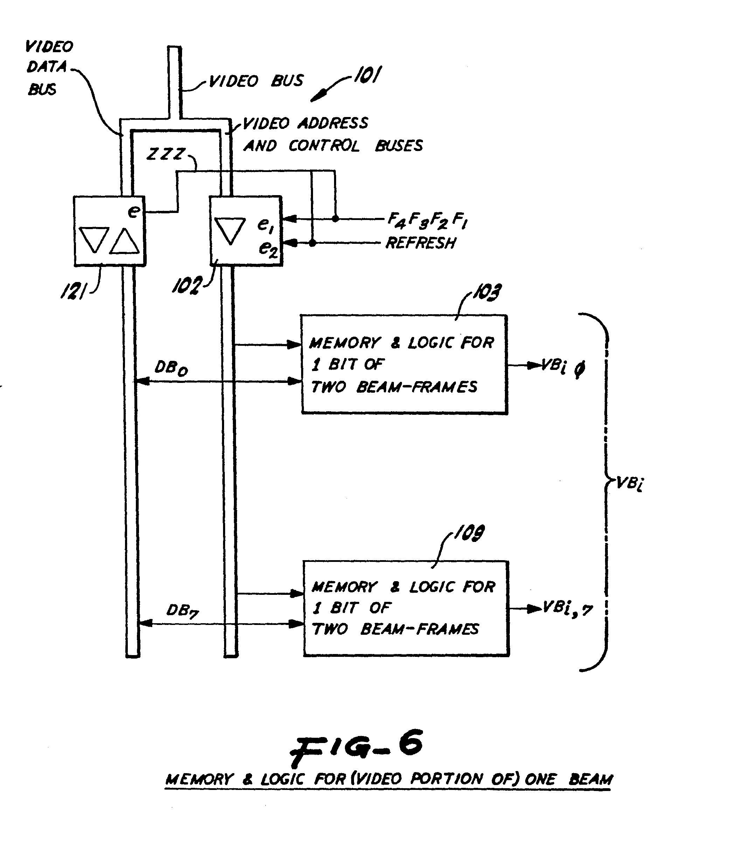

Referring to Figure 6, there is shown the architecture of the memory and logic circuit 101 for the video portion of the memory and logic circuit 20 for one beam. Circuit 101 corresponds to any one of the circuits 93-99 in Figure 5. Each circuit 101 contains a buffer 102 that enables the video address and control bus signals from the bus 14 to be received only if the memory bank in the circuit 101 has been selected or if the memory is being refreshed. (Note that the memory controller 31 automatically controls the generation of addresses for refreshing the dynamic video and mask memories.) Similarly, buffer 121 enables the video data bus signals $DB_0$ to $DB_7$ to be transmitted only if the beam (which includes this circuit 101) has been addressed by the microprocessor 35. There are eight memory and logic circuits 103-109 used with each beam, one for each bit of the eight-bit binary video signal. Thus the output signal from the circuit 101, denoted $VB_i$, contains eight binary signals, denoted $VB_{i,0}$ to $VB_{i,7}$.

Referring to Figure 7, there is shown the architecture of the memory and logic circuit 111 for one bit of the eight bit memory logic circuit 101 shown in Figure 6. This same circuit 111 is also used for the memory and logic circuit 92 for each beam of the mask layer, as shown in Figure 5.

The core of the circuit 111 comprises sixteen 64k dynamic RAMs 112a-112p. Each RAM is a standard 64k by 1 dynamic memory and all sixteen are accessed with the same address signal: $y_7$-$y_0$,$x_{10}$-$x_4$,$f_0$. As can now be seen, the main reason for having two frames of video data in each circuit 102 is the selection of 64k by 1 RAMs as the base memory element. In other embodiments the frames of video data could be "packaged" separately or bundled differently. As will be appreciated by those skilled in the art, the particular method of organizing multiple frames of video data is not important to the invention in its main aspect.

While the CRT 12 is scanning, data is read from the RAMs 112a-112p and sent to the CRT 12 as follows. First, one bit from each RAM is loaded into a buffer 113 (using clock signal CLK-1) while the previous set of bits is being sent to the CRT 12. Then, as the last bit from the previous set is sent to the CRT 12 the bits in buffer 113 are loaded (using clock signal CLK-2) into shift register 114. Finally the shift register 114 is clocked (using clock CLK-3), sending the bits to the multiplexer 92 and DAC 91 shown in Figure 5. The arrangement of buffer 113, shift register 114 and DAC 92 is sometimes called a pixel spitter.

Data is read from and written into the RAMs 112a-112p using a multiplexer 115 and demultiplexer 116. The video memory is accessed one eight-bit pixel at a time. Thus all bits (each from a separate circuit 111) for a pixel in a particular beam have the same address. This address contains the zzz and $x_3$-$x_0$ components of the video memory address, unlike the addresses used by the video display controller 30 for displaying images. Data being written into the video memory is directed by demultiplexers 116, using the $x_3$-$x_0$ component of the address, in each of eight parallel circuits 111 for each bit of the addressed pixel to the proper RAMs. Similarly, when reading data from the video memory the addressed bits are selected and sent to the video data bus using multiplexers 115 in each of the eight parallel circuits 111 for each bit of the eight bit pixel. As shown in Figure 6, access is limited to just one pixel of the eight pixels in the eight parallel beams by means of a buffer 121 which is controlled by 'zzz.

The invention is easily adapted to a 4k pixel by 4k pixel display system. Assuming that the system countinues to use only eight beams, the amount of memory for each beam need only be doubled to provide a single frame of memory. The video display processor (VDP) 30 works the same as before. If the tile size is kept at 16 pixels in the horizontal direction, the word count value passed to the DMA address counters 71 and 72 in the VDP 30 must be doubled; if the tile size is doubled to 32 pixels in the horizontal direction, the word count value remains unchanged.

The memory organization shown in Figure 9 could also be used to advantage in a high resolution display system using a single very high speed beam. In such a system, the "beam" dimension of the memory would become a sub-tile dimension. Each tile (i.e., each set of video data accessed as a single picture element for display purposes) in the system would comprise a set of sub-tiles which would be displayed in serial order on a single scan line. Thus a tile would be much longer in the horizontal direction than in the first described embodiment. But the relatively small sub-tiles would allow panning of the picture in relatively small increments rather than in large single tile increments. Thus the multi-dimensional memory organization shown in Figure 9 could be used to enable small increment panning and also fast memory access in a single beam display system.

While the present invention has been described with reference to a few specific embodiments, the description is illustrative of the invention and is not to be construed as limiting the invention. Various modifications may occur to those skilled in the art without departing from the true spirit and scope of the invention as defined by the appended claims.

CLAIMS:

1. A multi-beam raster scan video display system, comprising a multi-beam cathode ray tube (12) for producing a plurality of beams for simultaneously writing a plurality of scan lines, said tube (12) having input means (15) for receiving a signal for each beam, characterised by video memory means (20-27) for storing video data for each beam; and pixel spitter means (13) for simultaneously transferring video data from said video memory means (20-27) for all said beams to said input means (15) of said tube (12).

2. A system as claimed in Claim 1, characterised in that said video memory means (20-27) includes multi-bit per pixel storage means for each said beam; and said pixel spitter means includes digital-to-analog converter means (91) for each said beam, for converting multi-bit video data from said video memory means (20-27) into a grey scale analog video signal.

3. A system as claimed in Claim 1 or Claim 2, characterised in that said video memory means (20-27) is organized in a multi-dimensional format, including dimensions for the horizontal scan direction, the vertical scan direction, the grey scale dimension, and a dimension for multiple frames of data.

4. A system as claimed in Claim 3, characterised in that said video memory means (20-27) is organized as an array of tiles, each said tile comprising a three dimensional array of memory for an array of contiguous pixels including a plurality of horizontally contiguous pixels within each scan line of a band of vertically contiguous scan line of a band of vertically contiguous scan lines which are written simultaneously by said multi-beam cathode ray tube (12).

5. A system as claimed in any preceding claim, characterised by multiport controller means (31,32,35) for accessing said video memory means (20-27), said controller means having a first port for accessing said video memory means (20-27) for display of the data therein on said tube (12) and a second, lower priority port for accessing specific pixels in said video memory means (20-27).

6. A system as claimed in Claim 5, characterised in that said multi-port controller means (31,32,35) includes video controller means (30) for automatically, sequentially accessing a predefined portion of said video memory means (20-27), starting at a specified address location, through said first port of said multi-port controller means (31,32,35) while said tube (12) is scanning.

7. A system as claimed in Claim 5 or Claim 6, characterised in that said video memory means (20-27) includes means for storing multiple frames of video data; and said multi-port controller means (31,32,35) includes means for selectively accessing each frame of said video data.

8. A system as claimed in any preceding claim, characterised by masking means (39) for masking at least a portion of the video image corresponding to the video data in said video memory means (20-27) with a second video image; said masking means (39) including video memory means for storing a second set of video data for each said beam.

9.    A system as claimed in any preceding claim, characterised by microprocessor means (35) responsive to predefined commands from an external source, for selectively reading and writing data into said video memory means (20-27) and for controlling the portion of the data in said video memory means which is displayed.

10.    A method of displaying a video image, using raster scan video display means (12) for writing the image and video memory means (20-27) for storing video image data corresponding to said video image, characterised by the steps of simultaneously writing a plurality of scan lines with said data, thereby simultaneously writing a band of scan lines comprising a portion of said video image.

11.    A method as claimed in Claim 10, wherein said video memory means (20-27) includes multi-bit per pixel storage means, characterised in that said writing step includes the step of converting multi-bit video data from said multi-bit per pixel storage means into a grey scale analog video signal.

12.    A method as claimed in Claim 10, wherein said video memory means (20-27) includes multi-port controller means (31,32,53) for accessing said video memory means (20-27), said controller means having a first port for accessing said video memory means (20-27) for display of the data therein on said display means (12) and a second, lower priority port for accessing specific pixels in said video memory means (20-27) characterised in that said writing step includes automatically, sequentially accessing a predefined portion of said video memory means (20-27), starting at a specified address location, through said first port of said multi-port controller means (31,32,35).

13. A method as claimed in Claim 10, Claim 11 or Claim 12, wherein said video memory means includes means for storing multiple frames of video data, characterised in that said accessing step includes selectively accessing one frame of said video data.

FIG-1

FIG-2

FIG-3

0181052

FIG_4

VIDEO DISPLAY PROCESSOR

**FIG-5**

MEMORY & LOGIC FOR ONE BEAM

## FIG-6

### MEMORY & LOGIC FOR (VIDEO PORTION OF) ONE BEAM

0181052

*FIG.7*

MEMORY & LOGIC FOR ONE BIT OF TWO FRAME-BEAMS

7/7

0181052

FIG-8

TIMING DIAGRAM

FIG-9

**European Patent Office**

**EUROPEAN SEARCH REPORT**

Application number

## DOCUMENTS CONSIDERED TO BE RELEVANT

EP 85303574.9

| Category | Citation of document with indication, where appropriate, of relevant passages | Relevant to claim | CLASSIFICATION OF THE APPLICATION (Int. Cl.4) |
|---|---|---|---|
| X | US - A - 3 821 796 (ERNSTOFF) <br> * Fig. 1-3,8,15a,15b; column 8, line 66 - column 11, line 36 * <br> -- | 1,2,10, 11,13 | H 04 N 5/68 <br> H 04 N 9/12 |
| P,X | US - A - 4 523 225 (MASUDA) <br> * Fig. 3,6,10,11; abstract * | 1,2,9-11 | |
| A | <br> -- | 3 | |
| X | EP - A2 - 0 068 288 (MATSUSHITA ELECTRIC INDUSTRIAL) <br> * Fig. 1-3,5a,5b; abstract * | 1,10 | |
| A | <br> -- | 2 | |
| A | US - A - 3 943 281 (KELLER) <br> -- | | |
| A | US - A - 3 930 120 (KELLER) <br> ---- | | |

**TECHNICAL FIELDS SEARCHED (Int. Cl.4)**

H 04 N 5/00

H 04 N 9/00

The present search report has been drawn up for all claims

| Place of search | Date of completion of the search | Examiner |
|---|---|---|
| VIENNA | 03-01-1986 | DRÖSCHER |

EPO Form 1503 03 82